# EUROPÄISCHE PATENTSCHRIFT

(11) **EP 3 434 562 B1**
(45) Veröffentlichungstag und Bekanntmachung des Hinweises auf die Patenterteilung: **18.09.2019**
(21) Anmeldenummer: 17182810.6
(22) Anmeldetag: 24.07.2017
(51) Int. Cl.: B62D 21/11

(54) **HILFSRAHMEN FÜR EIN FAHRZEUG, INSBESONDERE EIN ELEKTROFAHRZEUG**
AUXILIARY FRAME FOR A VEHICLE, IN PARTICULAR AN ELECTRIC VEHICLE
FAUX CHÂSSIS POUR UN VÉHICULE, EN PARTICULIER UN VÉHICULE ÉLECTRIQUE

(43) Veröffentlichungstag der Anmeldung: 30.01.2019
(73) Patentinhaber: Autotech Engineering Deutschland GmbH, 33647 Bielefeld (DE)
(72) Erfinder: Haselhorst, Kai, 33775 Versmold (DE); Friesen, Viktor, 33647 Bielefeld (DE); Frenzel, Oliver, 48336 Sassenberg (DE); Ulf, Sudowe, 49124 Georgsmarienhütte (DE)
(74) Vertreter: Cohausz & Florack

(56) Entgegenhaltungen:
- EP-A1- 1 591 349
- EP-A1- 1 733 951
- EP-A1- 2 990 308
- DE-A1-102012 021 562
- DE-A1-102012 111 461
- DE-A1-102013 004 804

## Beschreibung

Die Erfindung betrifft einen Hilfsrahmen, insbesondere Vorderachs-Hilfsrahmen, für ein Fahrzeug, insbesondere ein Elektrofahrzeug, mit einem ersten Schalenelement und einem zweiten Schalenelement, das mit dem ersten Schalenelement starr verbunden ist und mit demselben einen Hohlraum definiert.

Derartige Hilfsrahmen, auch als Achsträger bezeichnet, sind in vielfältigen Ausführungen bekannt (siehe z.B. DE 10 2012 021 562 A1 und DE 10 2012 111 461 A1 und EP 1 591 349 A1). Sie sollen bei hoher Festigkeit und Steifigkeit möglichst leicht sein und weisen üblicherweise Lenkeranbindungen (Lageraufnahmen) für Radführungselemente und andere Aggregate auf, um als Vormontageeinheit den Einbau kompletter Vorder- oder Hinterachsmodule mit Antriebseinheiten zu ermöglichen.

Elektromotoren von Elektrofahrzeugen können ihr maximales Drehmoment bereits im Stillstand des Fahrzeugs abgeben und brauchen daher, anders als ein Fahrzeugantrieb mit Verbrennungsmotor, in der Regel kein Schaltgetriebe. Die hohen Anfahrdrehmomente von Elektrofahrzeugen erfordern besonders stabil ausgelegte Hilfsrahmenkonstruktionen, an denen die Elektromotoren beispielsweise mittels einer Querbrücke befestigt werden. Denn würden wie bei herkömmlichen Hilfsrahmen für Fahrzeuge mit Verbrennungsmotor Blechschalenelemente des Hilfsrahmens, beispielsweise Oberschalen, mit üblichen Blechdicken von z.B. ca. 2,2 mm verbaut werden, würde es aufgrund zu großer Biegespannungen im Bereich der Querbrückenanbindung zum Versagen des Hilfsrahmens kommen. Um ein solches Bauteilversagen auszuschließen, ist es aus Praxis bekannt, die Blechdicke der Blechschalen, insbesondere der Oberschalen, zu erhöhen. Der dadurch erhöhte Materialeinsatz führt jedoch zu einer erheblichen Gewichtszunahme des Hilfsrahmens.

Aufgrund der relativ geringen Energiedichte, die eine wiederaufladbare Traktionsbatterie (Akkumulator) gegenüber einem kraftstoffgefüllten Tank bietet, sind Elektrofahrzeuge in der Regel deutlich schwerer als entsprechende Fahrzeuge mit Verbrennungsmotor. Hohe Fahrzeuggewichte ergeben hohe effektive und dynamische Achslasten, die wiederum zu einem erhöhten Fahrwerksverschleiß führen.

Der vorliegenden Erfindung liegt die Aufgabe zugrunde, einen Hilfsrahmen der eingangs genannten Art zu schaffen, der bei unverändertem oder nur wenig erhöhtem Gewicht eine deutlich höhere Stabilität, insbesondere höhere Biegefestigkeit besitzt.

Diese Aufgabe wird durch einen Hilfsrahmen mit den in Anspruch 1 angegebenen Merkmalen gelöst. Bevorzugte und vorteilhafte Ausgestaltungen des erfindungsgemäßen Hilfsrahmens sind in den Unteransprüchen angegeben.

Der erfindungsgemäße Hilfsrahmen ist aus Schalenelementen zusammengesetzt. Er umfasst insbesondere ein erstes Schalenelement und ein zweites Schalenelement, das mit dem ersten Schalenelement starr verbunden ist und mit demselben einen Hohlraum definiert. Des Weiteren umfasst der Hilfsrahmen eine Querbrücke zur Lagerung eines Fahrzeugantriebsaggregates, insbesondere eines Fahrzeugantriebsmotors, vorzugsweise Elektromotors, oder eines Getriebes. Die Querbrücke ist durch eine Schraubverbindung mit dem ersten Schalenelement und/oder dem zweiten Schalenelement verbunden. Zudem ist der Hilfsrahmen mit einem hülsenartigen Distanzelement zum Durchstecken einer Schraube zur Karosserieanbindung versehen. Das Distanzelement ist an einem seiner Enden an einem Durchgangsloch des ersten Schalenelements angeordnet und erstreckt sich innerhalb des Hohlraums in Richtung eines Durchgangslochs des zweiten Schalenelements. Das Distanzelement ist dadurch gekennzeichnet, dass es einen hülsenartigen Abschnitt zur Aufnahme einer Schraube der Schraubverbindung der Querbrücke aufweist.

Das erfindungsgemäße Distanzelement stellt eine Verstärkung des Hilfsrahmens dar. Es kann daher auch als Verstärkungselement bezeichnet werden. Das erfindungsgemäße Distanzelement (Verstärkungselement) definiert einen gemeinsamen Lastpfad von mindestens einer Antriebsaggregat-Querbrücken-Aufnahme zu mindestens einer Karosserieanbindung des Hilfsrahmens. Hierdurch sind die Antriebsaggregat-Querbrücken-Aufnahme und die Karosserieanbindung miteinander verbunden, wodurch der Hilfsrahmen im Bereich der Querbrückenanbindung verstärkt und die dort auftretende Biegespannung reduziert wird.

Der erfindungsgemäße Hilfsrahmen zeichnet sich somit bei unverändertem oder nur wenig erhöhtem Gewicht durch eine deutlich höhere Biegefestigkeit im Bereich der Querbrückenanbindung aus.

Die Schalenelemente des Hilfsrahmens sind vorzugsweise aus Blech, insbesondere aus Stahlblech hergestellt. Blech, insbesondere Stahlblech, bietet bei relativ geringen Materialkosten sehr gute Festigkeitseigenschaften. Es lässt sich in komplexe Geometrien umformen und ist auch gut schneidbar sowie schweißbar. Vorteilhaft können das erste Schalenelement und/oder das zweite Schalenelement des Hilfsrahmens aus höherfestem oder presshärtbarem Stahlblech, beispielsweise aus Mangan-Bor-Stahl, gefertigt sein. Solches Stahlblech zeichnet sich bei geringem Gewicht durch eine besonders hohe Biegefestigkeit sowie Zugfestigkeit aus.

Vorzugsweise weisen das erste Schalenelement und das zweite Schalenelement des Hilfsrahmens eine unterschiedliche Blechdicke auf. Das die Querbrücke unmittelbar aufnehmende (tragende) Schalenelement hat beispielsweise eine geringere Blechdicke als das damit starr verbundene andere Schalenelement.

Eine weitere vorteilhafte Ausgestaltung der Erfindung sieht vor, dass das Distanzelement einen stegförmigen Abschnitt aufweist, der einen hülsenartigen Abschnitt des Distanzelements zum Durchstecken einer Schraube zur Karosserieanbindung mit dem hülsenartigen Abschnitt zur Aufnahme einer Schraube der Schraubverbindung der Querbrücke verbindet, wobei der stegförmige Abschnitt relativ zu den hülsenartigen Abschnitten derart angeordnet ist, dass der jeweilige hülsenartige Abschnitt gegenüber beiden Seitenflächen des stegförmigen Abschnitts, die parallel zu einer Schraubenaufnahmeachse des jeweiligen hülsenartigen Abschnitts verlaufen, beiderseitig vorsteht. Durch diese Ausgestaltung lässt sich ein besonders gutes Lastaufnahmevermögen im Bereich der Querbrückenanbindung bei geringem Gewicht des Distanzelements (Verstärkungselements) erzielen. Diesbezüglich sieht eine weitere Ausgestaltung des Distanzelements vor, dass dessen stegförmiger Abschnitt eine senkrecht zu den beiden Seitenflächen gemessene Dicke im Bereich von 3 bis 10 mm, vorzugsweise im Bereich von 4 bis 8 mm aufweist.

Eine weitere vorteilhafte Ausgestaltung der Erfindung ist dadurch gekennzeichnet, dass das Distanzelement zumindest abschnittsweise schlaufenförmig ausgebildet ist. Hierdurch lässt sich ein gemeinsamer Lastpfad von mindestens einer Antriebsaggregat-Querbrücken-Aufnahme zu mindestens einer Karosserieanbindung des Hilfsrahmens auf einfache Weise zuverlässig verwirklichen. Die schlaufenförmigen Abschnitte des Distanzelements definieren dabei vorzugsweise mindestens zwei geschlossene Schlaufen, die insbesondere die Funktion von Distanzhülsen haben.

Hinsichtlich geringer Material- und Fertigungskosten ist es günstig, wenn das erfindungsgemäße Distanzelement aus einem einzelnen Blech, vorzugsweise aus einem einzelnen Stahlblech, hergestellt ist. Hierzu sieht eine Ausgestaltung des Distanzelements beispielsweise vor, dass zwei Schlaufenenden des Distanzelements im Stumpfstoß miteinander verschweißt sind. Die Fertigungskosten des Distanzelements sind in diesem Fall relativ gering, da nur eine einzelne Schweißnaht an dem Stumpfstoß hergestellt werden muss.

Eine andere Ausgestaltung des Distanzelements ist dadurch gekennzeichnet, dass zwei Schlaufenenden des Distanzelements im Abstand voneinander und im Überlappstoß mit dem stegförmigen Abschnitt verschweißt sind. In diesem Fall müssen zwar zwei Schweißnähte, vorzugsweise Kehlnahtschweißnähte hergestellt werden, jedoch wird andererseits im Bereich des stegförmigen Abschnitts Blechmaterial eingespart. Denn die beiden Schlaufenenden des aus einem einzelnen Blech hergestellten Distanzelements begrenzen eine Ausnehmung an dessen stegförmigen Abschnitt. Diese Ausnehmung bzw. Materialeinsparung reduziert das Gewicht des Distanzelements.

Das Stahlblech, aus welchem das Distanzelement vorzugsweise in einschaliger Blechausführung hergestellt wird, besitzt eine Festigkeit, insbesondere Zugfestigkeit von vorzugsweise mindestens 300 MPa, besonders bevorzugt mindestens 480 MPa.

Eine andere Ausgestaltung des Distanzelements ist dadurch gekennzeichnet, dass das Distanzelement einteilig als metallisches Guss- oder Schmiedeteil ausgeführt ist. Auch in diesem Fall weist das Material des Distanzelements eine Festigkeit, insbesondere Zugfestigkeit von vorzugsweise mindestens 300 MPa, besonders bevorzugt mindestens 480 MPa auf. Die Ausführung des Distanzelements als einteiliges metallisches Guss- oder Schmiedeteil hat den Vorteil, dass das Gewicht des Distanzelements weiter reduziert werden kann, da in diesem Fall keine zweilagige Blechanordnung im Bereich des stegförmigen Abschnitts des Distanzelements erforderlich ist. Außerdem entfällt in diesem Fall das Herstellen von Schweißnähten zur Fertigung des Distanzelements. Des Weiteren hat die Ausführung des Distanzelements als einteiliges metallisches Guss- oder Schmiedeteil den Vorteil, dass die hülsenartigen Abschnitte des Distanzelements mit kreiszylindrischen Ausnehmungen mit hoher Maßgenauigkeit des Innendurchmessers der jeweiligen kreiszylindrischen Ausnehmung gefertigt werden können.

Eine weitere vorteilhafte Ausgestaltung der Erfindung ist dadurch gekennzeichnet, dass das Distanzelement mindestens zwei hülsenartige Abschnitte zum Durchstecken von mindestens zwei Schrauben zur Karosserieanbindung aufweist. Hierdurch lässt sich das Lastaufnahmevermögen des Distanzelements weiter steigern und die im Bereich der Querbrückenanbindung auftretende Biegespannung weiter reduzieren. Alternativ oder ergänzend zu dieser Ausgestaltung kann das Distanzelement auch mindestens zwei hülsenartige Abschnitte zur Aufnahme von mindestens zwei Schrauben der Schraubverbindung der Querbrücke aufweisen. Auch hierdurch lässt sich das Lastaufnahmevermögen des Distanzelements steigern und die im Bereich der Querbrückenanbindung auftretende Biegespannung weiter reduzieren. Das Distanzelement bzw. der die hülsenförmigen Abschnitte verbindende stegförmige Abschnitt ist in diesen Ausgestaltungen vorzugsweise sternförmig ausgebildet.

Die an der Querbrückenanbindung und an der Karosserieanbindung des Hilfsrahmens erforderlichen Schraubendurchmesser können unterschiedlich groß sein, insbesondere um unterschiedliche Schraubenanzugsmomente zu ermöglichen. Dementsprechend sieht eine weitere Ausgestaltung des erfindungsgemäßen Hilfsrahmens vor, dass der hülsenartige Abschnitt zur Aufnahme einer Schraube der Schraubverbindung der Querbrücke eine Aufnahmequerschnittsfläche aufweist, die kleiner als die Aufnahmequerschnittsfläche des hülsenartigen Abschnitts des Distanzelements ist, welcher dem Durchstecken einer Schraube zur Karosserieanbindung dient.

Nach einer weiteren vorteilhaften Ausgestaltung des Hilfsrahmens ist in das erste Schalenelement und/oder in das zweite Schalenelement ein Absatz zur Aufnahme des Distanzelements eingeformt. Der eingeformte Absatz erleichtert die passgenaue Anordnung des Distanzelements in Bezug auf die Durchgangslöcher zur Aufnahme der besagten Schrauben. Zudem verbessert der eingeformte Absatz die Biegefestigung des betreffenden Schalenelements insbesondere im Bereich der Querbrückenanbindung.

Nachfolgend wird die Erfindung anhand einer mehrere Ausführungsbeispiele darstellenden Zeichnung näher erläutert. Es zeigen:
- Fig. 1a und 1b: einen Abschnitt eines Hilfsrahmens für ein Fahrzeug, insbesondere Elektrofahrzeug, ohne und mit einer an einer Oberschale des Hilfsrahmens angebundenen Querbrücke, in einer perspektivischen Darstellung;
- Fig. 2: einen Abschnitt des Hilfsrahmens entsprechend Abschnitt II in Fig. 1, ohne Oberschale, mit Blick auf ein erfindungsgemäßes Distanzelement, in perspektivischer Darstellung; und
- Fig. 3 bis 5: verschiedene Ausführungsbeispiele des erfindungsgemäßen Distanzelements, jeweils in perspektivischer Darstellung.

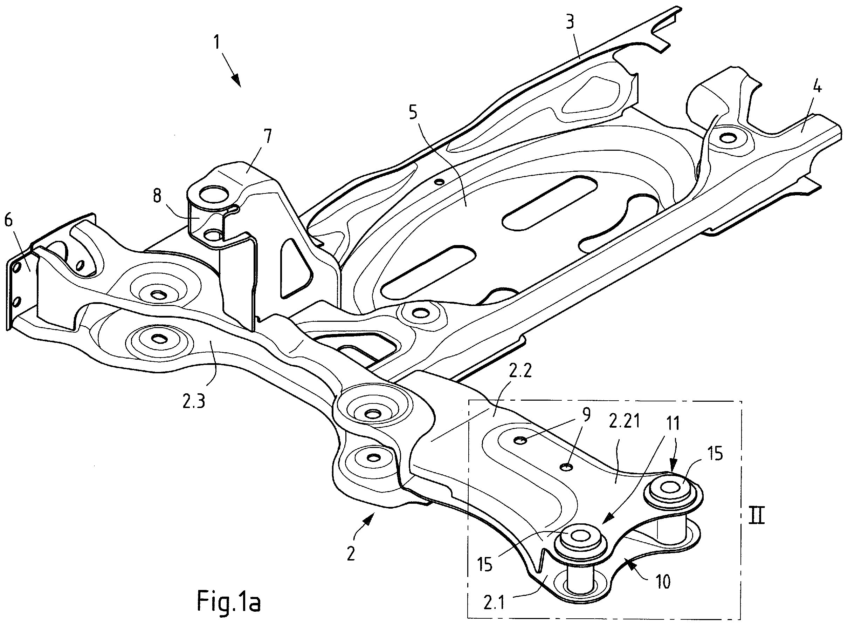

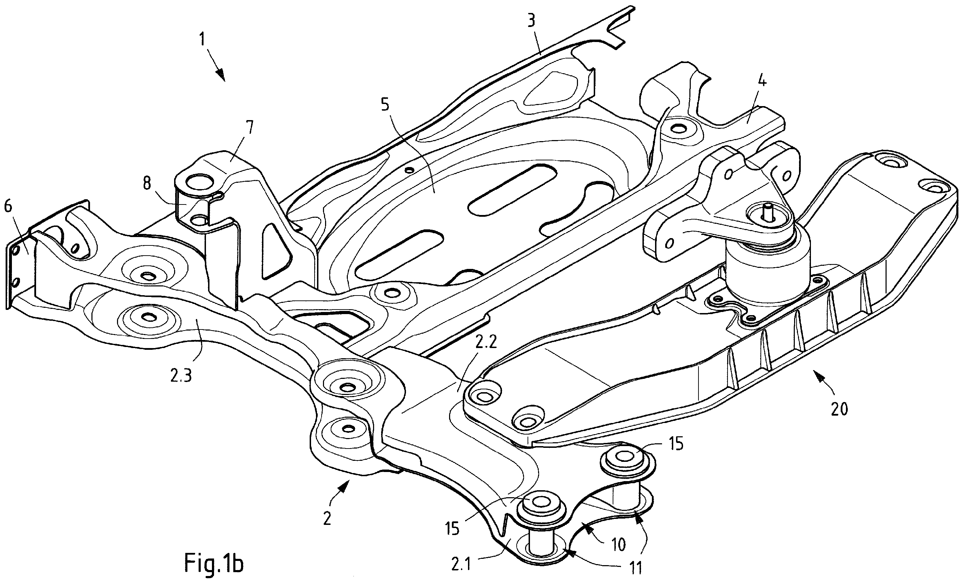

In Fig. 1a und Fig. 1b ist ein Abschnitt eines Hilfsrahmens 1 für ein Kraftfahrzeug, insbesondere ein Elektrofahrzeug gezeigt. Der Hilfsrahmen 1, der hier zum Beispiel als Vorderachs-Hilfsrahmen ausgeführt ist, ist aus Längsträgern und Querträgern aufgebaut. Unter dem Begriff "Längsträger" werden hier Tragelemente oder Abschnitte von Tragelementen des Hilfsrahmens verstanden, die sich im montierten Zustand des Hilfsrahmens 1 im Wesentlichen entlang der Längsachse des betreffenden Kraftfahrzeuges erstrecken. Die Querträger erstrecken sich dagegen im montierten Zustand des Hilfsrahmens 1 im Wesentlichen horizontal und quer zu der Längsachse des Kraftfahrzeuges.

Die Längsträger und Querträger sind aus Blechschalen gebildet. In Fig. 1a und Fig. 1b sind der linke vordere Längsträger 2, ein vorderer Querträger 3 und eine als Querträger dienende Oberschale 4 gezeigt. Des Weiteren sind ein als Lenkungsschutz dienendes Blech 5, ein Crash-Absorber-Anbindungsblech 6 und sogenannte Turmschalen 7, 8, die der Anbindung des Hilfsrahmens 1 an die Fahrzeugkarosserie dienen, zu erkennen. Zudem ist der Hilfsrahmen 1 mit mindestens einer Querbrücke 20 versehen, die an den Längsträgern 2 mittels Schraubverbindungen befestigt wird bzw. ist. Die Querbrücke 20 dient der Lagerung eines Fahrzeugantriebsaggregates, beispielsweise eines Elektromotors. Alternativ kann aber auch ein Verbrennungsmotor oder ein Getriebe an der Querbrücke 20 gelagert sein.

Die Verbindung der mindestens einen Querbrücke 20 mit den Längsträgern 2 erfolgt beispielsweise an den in Fig. 1a und 1b gezeigten Aufnahmen 9, die Durchgangslöcher zur Aufnahme von Schrauben aufweisen. Der jeweilige Längsträger 2 des Hilfsrahmens 1 weist ein erstes Schalenelement 2.1 und ein zweites Schalenelement 2.2 auf, das mit dem ersten Schalenelement 2.1 starr verbunden ist und mit demselben einen Hohlraum 10 definiert. Das Schalenelement 2.1 kann auch als Hauptschale und das Schalenelement 2.2 als Oberschale bezeichnet werden. Zusätzlich kann der Längsträger 2 mindestens ein weiteres Schalenelement 2.3, beispielsweise eine Unterschale aufweisen. Die Schalenelemente 2.1, 2.2, 2.3 sind vorzugsweise aus Stahlblech hergestellt und weisen vorzugsweise unterschiedliche Blechdicken und/oder unterschiedliche Materialgüten, insbesondere Streckgrenzen und Zugfestigkeiten auf. So kann beispielsweise das Schalenelement (Oberschale) 2.2 eine geringere Blechdicke aufweisen als das Schalenelement (Hauptschale) 2.1.

Benachbart zu den Durchgangslöchern 9, die der Aufnahme von Schrauben zur Anbindung der Querbrücke 20 an den Längsträger dienen, sind mindestens ein oder vorzugsweise zwei Anbindungselemente 11 zur Anbindung des Hilfsrahmens 1 an die Fahrzeugkarosserie angeordnet.

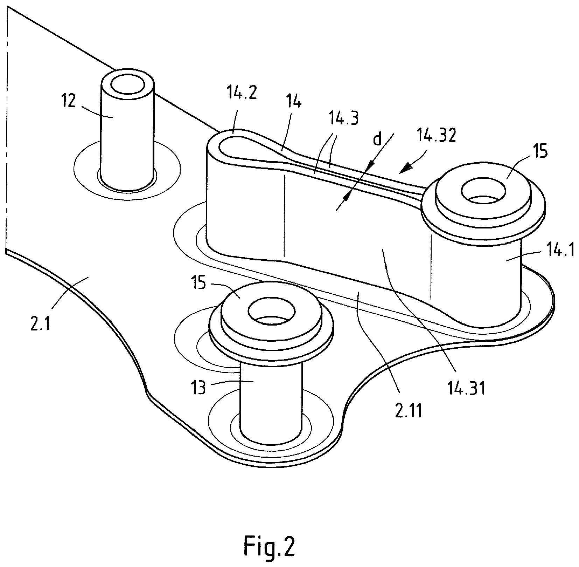

Die Anbindung (Aufnahme) der Querbrücke 20 an den Längsträger 2 sowie die Anbindungselemente 11 zur Anbindung des Hilfsrahmens 1 an die Fahrzeugkarosserie ist mittels eines oder mehrerer Distanzelemente 12, 13, 14 ausgeführt. In dem in den Figuren 1a, 1b und 2 dargestellten Ausführungsbeispiel sind die Distanzelemente 12, 13 in Form von zylindrischen Distanzhülsen und in Form eines hülsenartigen Distanzelements 14 ausgebildet. Die Anbindungselemente 11 sind mit Unterlegscheiben 15, vorzugsweise Zahnscheiben versehen. Das hülsenartige Distanzelement 14 umfasst einen ersten hülsenartigen Abschnitt 14.1 zum Durchstecken, d.h. zur Aufnahme einer Schraube zur Karosserieanbindung und einen zweiten hülsenartigen Abschnitt 14.2 zur Aufnahme einer Schraube der Schraubverbindung der Querbrücke 20. Es ist dabei an einem seiner Enden an einem Durchgangsloch des ersten Schalenelements 2.1 angeordnet und erstreckt sich innerhalb des von den Schalenelementen 2.1, 2.2 begrenzten Hohlraums 10 in Richtung eines Durchgangslochs 9 des zweiten Schalenelements 2.2.

Das hülsenartige Distanzelement 14 wirkt als Verstärkungselement. Es definiert einen gemeinsamen Lastpfad von einer Querbrücken-Aufnahme 9 zu einer Karosserieanbindung 11. Die Querbrücken-Aufnahme 9 und die Karosserieanbindung 11 sind somit durch das Distanzelement 14 unmittelbar miteinander verbunden.

Das Distanzelement 14 weist hierzu vorzugsweise einen stegförmigen Abschnitt 14.3 auf, der den hülsenartigen Abschnitt 14.1 zum Durchstecken einer Schraube zur Karosserieanbindung mit dem hülsenartigen Abschnitt 14.2 zur Aufnahme einer Schraube der Schraubverbindung der Querbrücke 20 verbindet. Der stegförmige Abschnitt 14.3 ist in Bezug auf die hülsenartigen Abschnitten 14.1, 14.2 derart angeordnet, dass der jeweilige hülsenartige Abschnitt 14.1, 14.2 gegenüber beiden Seitenflächen 14.31, 14.32 des stegförmigen Abschnitts 14.3, die im Wesentlichen parallel zu einer Schraubenaufnahmeachse des jeweiligen hülsenartigen Abschnitts 14.1,14.2 verlaufen, beiderseitig vorsteht. Die Dicke d des stegförmigen Abschnitts 14.3, senkrecht zu seinen beiden Seitenflächen 14.31, 14.32 gemessen, liegt beispielsweise im Bereich von 4 bis 8 mm.

In den Figuren 1a, 1b und 2 ist ferner zu erkennen, dass in das erste Schalenelement 2.1 und in das zweite Schalenelement 2.2 des Längsträgers 2 jeweils ein Absatz 2.11, 2.21 zur Aufnahme des Distanzelements 14 eingeformt ist.

Das hülsenartige Distanzelement 14 kann in verschiedener Weise ausgeführt sein. In dem in Fig. 2 gezeigten Ausführungsbeispiel ist das Distanzelement 14 schlaufenförmig ausgebildet. Die Abschnitte 14.1, 14.2 des Distanzelements definieren zwei geschlossene Schlaufen, welche die Funktion von Distanzhülsen haben. Das Distanzelement 14 ist vorzugsweise einschalig, d.h. aus einem einzelnen Blech hergestellt. Bei dem Blechmaterial handelt es sich vorzugsweise um höherfestes Stahlblech, das beispielsweise eine Zugfestigkeit im Bereich von 480 bis 620 MPa und eine Mindeststreckgrenze von 420 MPa aufweist.

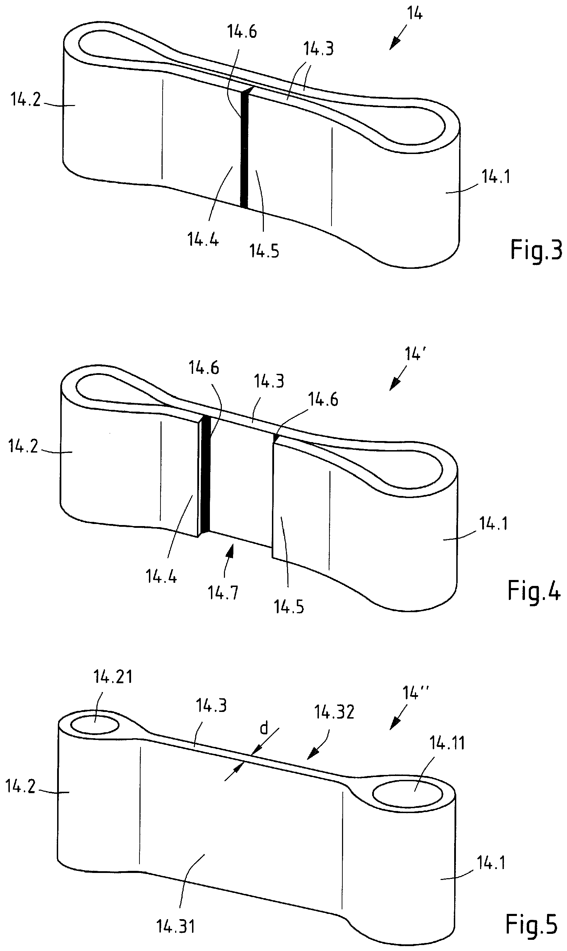

Bei dem in Fig. 3 dargestellten Ausführungsbeispiel sind die beiden Schlaufenenden 14.4, 14.5 des Distanzelements 14 im Stumpfstoß miteinander verschweißt. Der Stumpfstoß bzw. die Schweißnaht 14.6 ist dabei im Bereich des stegförmigen Abschnitts 14.3, beispielsweise etwa in der Mitte des Abschnitts 14.3 angeordnet. Alternativ könnte der Stumpfstoß bzw. die Schweißnaht 14.6 auch im Bereich einer der beiden geschlossenen Schlaufen, d.h. der Abschnitt 14.1, 14.2, welche die Funktion von Distanzhülsen haben, angeordnet sein. Insbesondere kann die Schweißnaht 14.6 im Bereich des Scheitels einer der beiden Schlaufen liegen.

Bei dem in Fig. 4 dargestellten Ausführungsbeispiel sind die beiden Schlaufenenden 14.4, 14.5 des einschalig aus einem einzelnen Blech hergestellten Distanzelements 14' im Abstand voneinander und im Überlappstoß mit dem stegförmigen Abschnitt 14.3 verschweißt. Die Schlaufenenden 14.4, 14.5 begrenzen somit eine Ausnehmung 14.7 an dem stegförmigen Abschnitt 14.3 des Distanzelements 14'. Die Schweißnähte 14.6 sind vorzugsweise als Kehlnahtschweißnähte ausgeführt. Die Abschnitte 14.1, 14.2 des Distanzelements (Verstärkungselements) 14' definieren wiederum zwei geschlossene Schlaufen, welche die Funktion von Distanzhülsen haben.

Bei dem in Fig. 5 dargestellten Ausführungsbeispiel ist das Distanzelement (Verstärkungselement) 14" einteilig als metallisches Guss- oder Schmiedeteil ausgeführt. Die hülsenartigen Abschnitte 14.1, 14.2 sind somit einstückig mit dem stegförmigen Abschnitt 14.3 des Distanzelements 14" verbunden. Die Abschnitte 14.1, 14.2 weisen dabei vorzugsweise kreiszylindrische Durchgangslöcher 14.11, 14.21 zur Aufnahme der Schrauben auf.

Den in den Figuren 3 bis 5 dargestellten Ausführungsbeispielen des Distanzelement 14, 14', 14" ist gemein, dass die geschlossene Schlaufe bzw. der hülsenartige Abschnitt 14.2 zur Aufnahme einer Schraube der Schraubverbindung der Querbrücke 20 eine Aufnahmequerschnittsfläche aufweist, die kleiner als die Aufnahmequerschnittsfläche der Schlaufe bzw. des hülsenartigen Abschnitts 14.1 des Distanzelements ist, welcher dem Durchstecken einer Schraube zur Karosserieanbindung dient. In Fig. 5 ist der Innendurchmesser des hülsenartigen Abschnitts 14.2, welcher der Aufnahme einer Schraube der Schraubverbindung der Querbrücke 20 dient, kleiner als der Innendurchmesser des hülsenartigen Abschnitts 14.1, welcher der Aufnahme einer Schraube zur Karosserieanbindung dient.

Die Ausführung der Erfindung ist nicht auf die in der Zeichnung dargestellten Beispiele beschränkt. Vielmehr umfasst die Erfindung weitere Ausführungsvarianten, die auch bei einer von den gezeigten Beispielen abweichenden Gestaltung von der in den beigefügten Ansprüchen angegebenen Erfindung Gebrauch machen. So kann das Distanzelement 14, 14', 14" beispielsweise auch mindestens zwei hülsenartige Abschnitte 14.1 zum Durchstecken von mindestens zwei Schrauben zur Karosserieanbindung aufweisen. Zusätzlich oder alternativ kann das Distanzelement 14, 14', 14" auch mindestens zwei hülsenartige Abschnitte 14.2 zur Aufnahme von mindestens zwei Schrauben der Schraubverbindung der Querbrücke 20 aufweisen. Das Distanzelement 14,14', 14" bzw. sein stegförmiger Abschnitt 14.3, welcher die hülsenförmigen Abschnitte 14.1, 14.2 miteinander verbindet, ist dann vorzugsweise im Wesentlichen sternförmig ausgebildet.

## Patentansprüche

1. Hilfsrahmen, insbesondere Vorderachs-Hilfsrahmen, für ein Fahrzeug, insbesondere Elektrofahrzeug,
mit einem ersten Schalenelement (2.1) und einem zweiten Schalenelement (2.2), das mit dem ersten Schalenelement (2.1) starr verbunden ist und mit demselben einen Hohlraum (10) definiert,
mit einer Querbrücke (20) zur Lagerung eines Fahrzeugantriebsaggregates, insbesondere eines Fahrzeugantriebsmotors oder eines Getriebes, die durch eine Schraubverbindung mit dem ersten Schalenelement (2.1) und/oder dem zweiten Schalenelement (2.2) verbunden ist, und
mit einem hülsenartigen Distanzelement (14, 14', 14") zum Durchstecken einer Schraube zur Karosserieanbindung,
wobei das Distanzelement (14, 14', 14") an einem seiner Enden an einem Durchgangsloch des ersten Schalenelements (2.1) angeordnet ist und sich innerhalb des Hohlraums (10) in Richtung eines Durchgangslochs (9) des zweiten Schalenelements (2.2) erstreckt, und wobei das Distanzelement (14, 14', 14") einen hülsenartigen Abschnitt (14.2) zur Aufnahme einer Schraube der Schraubverbindung der Querbrücke (20) aufweist.

2. Hilfsrahmen nach Anspruch 1, **dadurch gekennzeichnet, dass** die Schalenelemente (2.1, 2.2) aus Blech, vorzugsweise aus Stahlblech, hergestellt sind.

3. Hilfsrahmen nach Anspruch 1 oder 2, **dadurch gekennzeichnet, dass** das Distanzelement (14, 14', 14") einen stegförmigen Abschnitt (14.3) aufweist, der einen hülsenartigen Abschnitt (14.1) des Distanzelements zum Durchstecken einer Schraube zur Karosserieanbindung mit dem hülsenartigen Abschnitt (14.2) zur Aufnahme einer Schraube der Schraubverbindung der Querbrücke (20) verbindet, wobei der stegförmige Abschnitt (14.3) relativ zu den hülsenartigen Abschnitten (14.1, 14.2) derart angeordnet ist, dass der jeweilige hülsenartige Abschnitt (14.1, 14.2) gegenüber beiden Seitenflächen (14.31, 14.32) des stegförmigen Abschnitts (14.3) die parallel zu einer Schraubenaufnahmeachse des jeweiligen hülsenartigen Abschnitts (14.1, 14.2) verlaufen, beiderseitig vorsteht.

4. Hilfsrahmen nach Anspruch 3, **dadurch gekennzeichnet, dass** der stegförmige Abschnitt (14.3) eine senkrecht zu den beiden Seitenflächen (14.31, 14.32) gemessene Dicke (d) im Bereich von 3 bis 10 mm, vorzugsweise im Bereich von 4 bis 8 mm aufweist.

5. Hilfsrahmen nach einem der Ansprüche 1 bis 4, **dadurch gekennzeichnet, dass** das Distanzelement (14, 14') zumindest abschnittsweise schlaufenförmig ausgebildet ist.

6. Hilfsrahmen nach einem der Ansprüche 1 bis 5, **dadurch gekennzeichnet, dass** das Distanzelement (14, 14') aus einem einzelnen Blech, vorzugsweise aus einem einzelnen Stahlblech, hergestellt ist.

7. Hilfsrahmen nach den Ansprüchen 5 und 6, **dadurch gekennzeichnet, dass** zwei Schlaufenenden (14.4, 14.5) des Distanzelements (14, 14') im Stumpfstoß miteinander verschweißt sind.

8. Hilfsrahmen nach den Ansprüchen 5 und 6, **dadurch gekennzeichnet, dass** zwei Schlaufenenden (14.4, 14.5) des Distanzelements (14, 14') im Abstand voneinander und im Überlappstoß mit dem stegförmigen Abschnitt (14.3) verschweißt sind.

9. Hilfsrahmen nach Anspruch 8, **dadurch gekennzeichnet, dass** die Schweißverbindungen an den beiden Schlaufenenden (14.4, 14.5) als Kehlnahtschweißnähte (14.6) ausgeführt sind.

10. Hilfsrahmen nach einem der Ansprüche 1 bis 5, **dadurch gekennzeichnet, dass** das Distanzelement (14") einteilig als metallisches Guss- oder Schmiedeteil ausgeführt ist.

11. Hilfsrahmen nach einem der Ansprüche 1 bis 10, **dadurch gekennzeichnet, dass** das Distanzelement (14, 14', 14") mindestens zwei hülsenartige Abschnitte (14.1) zum Durchstecken von mindestens zwei Schrauben zur Karosserieanbindung aufweist.

12. Hilfsrahmen nach einem der Ansprüche 1 bis 11, **dadurch gekennzeichnet, dass** das Distanzelement (14, 14', 14") mindestens zwei hülsenartige Abschnitte (14.2) zur Aufnahme von mindestens zwei Schrauben der Schraubverbindung der Querbrücke (20) aufweist.

13. Hilfsrahmen nach Anspruch 11 oder 12, **dadurch gekennzeichnet, dass** das Distanzelement (14, 14', 14") sternförmig ausgebildet ist.

14. Hilfsrahmen nach einem der Ansprüche 1 bis 13, **dadurch gekennzeichnet, dass** der hülsenartige Abschnitt (14.2) zur Aufnahme einer Schraube der Schraubverbindung der Querbrücke (20) eine Aufnahmequerschnittsfläche aufweist, die kleiner als die Aufnahmequerschnittsfläche des hülsenartigen Abschnitts (14.1) des Distanzelements (14, 14', 14") ist, welcher dem Durchstecken einer Schraube zur Karosserieanbindung dient.

15. Hilfsrahmen nach einem der Ansprüche 1 bis 14, **dadurch gekennzeichnet, dass** in das erste Schalenelement (2.1) und/oder in das zweite Schalenelement (2.2) ein Absatz (2.11, 2.21) zur Aufnahme des Distanzelements eingeformt ist.

## Claims

1. An auxiliary frame, in particular a front axle auxiliary frame, for a vehicle, in particular an electric vehicle, with a first shell element (2.1) and with a second shell element (2.2) which is rigidly connected to the first shell element (2.1) and, with the latter, defines a cavity (10),
with a cross bridge (20) for bearing a vehicle drive unit, in particular a vehicle drive motor or a gear unit, which cross bridge is connected by a screwed connection to the first shell element (2.1) and/or to the second shell element (2.2), and
with a sleeve-like spacer element (14, 14', 14") for the inserting of a screw for vehicle body connection,
wherein the spacer element (14, 14', 14") is arranged at one of its ends at a through-hole of the first shell element (2.1) and extends within the cavity (10) in the direction of a through-hole (9) of the second shell element (2.2), and wherein the spacer element (14, 14', 14") has a sleeve-like portion (14.2) for receiving a screw of the screwed connection of the cross bridge (20).

2. The auxiliary frame according to Claim 1, **characterized in that** the shell elements (2.1, 2.2) are made from sheet metal, preferably from sheet steel.

3. The auxiliary frame according to Claim 1 or 2, **characterized in that** the spacer element (14, 14', 14") has a web-shaped portion (14.3), which connects a sleeve-like portion (14.1) of the spacer element for the inserting of a screw for vehicle body connection with the sleeve-like portion (14.2) for the receiving of a screw of the screwed connection of the cross bridge (20), wherein the web-shaped portion (14.3) is arranged relative to the sleeve-like portions (14.1, 14.2) such that the respective sleeve-like portion (14.1, 14.2) projects on both sides with respect to the two side faces (14.31, 14.32) of the web-shaped portion (14.3) which run parallel to a screw receiver axis of the respective sleeve-like portion (14.1, 14.2).

4. The auxiliary frame according to Claim 3, **characterized in that** the web-shaped portion (14.3) has a thickness (d), measured perpendicularly to the two side faces (14.31, 14.32), in the range of 3 to 10 mm, preferably in the range of 4 to 8 mm.

5. The auxiliary frame according to one of Claims 1 to 4, **characterized in that** the spacer element (14, 14') is configured at least partially in a loop shape.

6. The auxiliary frame according to one of Claims 1 to 5, **characterized in that** the spacer element (14, 14') is made from a single metal sheet, preferably from a single steel sheet.

7. The auxiliary frame according to Claims 5 and 6, **characterized in that** two loop ends (14.4, 14.5) of the spacer element (14, 14') are welded to one another in a butt joint.

8. The auxiliary frame according to Claims 5 and 6, **characterized in that** two loop ends (14.4, 14.5) of the spacer element (14, 14') are at a distance from one another and welded in a lap joint to the web-shaped portion (14.3).

9. The auxiliary frame according to Claim 8, **characterized in that** the welded connections at the two loop ends (14.4, 14.5) are embodied as fillet seam weld seams (14.6).

10. The auxiliary frame according to one of Claims 1 to 5, **characterized in that** the spacer element (14") is embodied in one piece as a metallic casting or forging.

11. The auxiliary frame according to one of Claims 1 to 10, **characterized in that** the spacer element (14, 14', 14") has at least two sleeve-like portions (14.1) for the inserting of at least two screws for vehicle body connection.

12. The auxiliary frame according to one of Claims 1 to 11, **characterized in that** the spacer element (14, 14', 14") has at least two sleeve-like portions (14.2) for the receiving of at least two screws of the screwed connection of the cross bridge (20).

13. The auxiliary frame according to Claim 11 or 12, **characterized in that** the spacer element (14, 14' 14") is configured so as to be star-shaped.

14. The auxiliary frame according to one of Claims 1 to 13, **characterized in that** the sleeve-like portion (14.2) for receiving a screw of the screwed connection of the cross bridge (20) has a receiving cross-sectional area which is smaller than the receiving cross-sectional area of the sleeve-like portion (14.1) of the spacer element (14, 14', 14"), which serves for the inserting of a screw for vehicle body connection.

15. The auxiliary frame according to one of Claims 1 to 14, **characterized in that** a shoulder (2.11, 2.21) for receiving the spacer element is formed into the first shell element (2.1) and/or into the second shell element (2.2).

## Revendications

1. Cadre auxiliaire, en particulier cadre auxiliaire d'essieu avant, pour un véhicule, en particulier un véhicule électrique,
comprenant un premier élément en forme de coque (2.1) et un deuxième élément en forme de coque (2.2) qui est assemblé de manière rigide avec le premier élément en forme de coque (2.1) et définit avec celui-ci un espace creux (10),
comprenant un pont transversal (20) servant à la fixation d'un groupe d'entraînement du véhicule, en particulier d'un moteur d'entraînement du véhicule ou d'une transmission, lequel pont transversal est assemblé, par un assemblage à vis, avec le premier élément en forme de coque (2.1) et/ou avec le deuxième élément en forme de coque (2.2), et comprenant un élément d'écartement en forme de manchon (14, 14', 14") servant au passage d'une vis prévue pour la fixation à la carrosserie,
où l'élément d'écartement (14, 14', 14") est disposé, au niveau de l'une de ses extrémités, sur un trou de passage du premier élément en forme de coque (2.1) et s'étend, à l'intérieur de l'espace creux (10), en direction d'un trou de passage (9) du deuxième élément en forme de coque (2.2), et où l'élément d'écartement (14, 14', 14") présente une partie (14.2) en forme de manchon servant au logement d'une vis de l'assemblage à vis du pont transversal (20).

2. Cadre auxiliaire selon la revendication 1,
**caractérisé en ce que** les éléments en forme de coque (2.1, 2.2) sont fabriqués à partir d'une tôle, de préférence à partir d'une tôle en acier.

3. Cadre auxiliaire selon la revendication 1 ou 2,
**caractérisé en ce que** l'élément d'écartement (14, 14', 14") présente une partie en forme de barrette (14.3) qui relie une partie en forme de manchon (14.1) de l'élément d'écartement servant au passage d'une vis prévue pour la fixation à la carrosserie, à la partie en forme de manchon (14.2) servant au logement d'une vis de l'assemblage à vis du pont transversal (20), où la partie en forme de barrette (14.3) est disposée par rapport aux parties en forme de manchon (14.1, 14.2), de manière telle que la partie respective en forme de manchon (14.1, 14.2) soit en saillie, des deux côtés, par rapport aux deux faces latérales (14.31, 14.32) de la partie en forme de barrette (14.3), lesquelles faces latérales s'étendent parallèlement à un axe de logement de la vis de la partie respective en forme de manchon (14.1, 14.2).

4. Cadre auxiliaire selon la revendication 3,
**caractérisé en ce que** la partie en forme de barrette (14.3) présente une épaisseur (d) mesurée perpendiculairement aux deux faces latérales (14.31, 14.32), ladite épaisseur se situant dans la plage comprise entre 3 mm et 10 mm, de préférence dans la plage comprise entre 4 mm et 8 mm.

5. Cadre auxiliaire selon l'une quelconque des
revendications 1 à 4, **caractérisé en ce que** l'élément d'écartement (14, 14') est configuré au moins partiellement en forme de boucle.

6. Cadre auxiliaire selon l'une quelconque des
revendications 1 à 5, **caractérisé en ce que** l'élément d'écartement (14, 14') est fabriqué à partir d'une seule tôle, de préférence à partir d'une seule tôle en acier.

7. Cadre auxiliaire selon les revendications 5 et 6, **caractérisé en ce que** deux extrémités de boucle (14.4, 14.5) de l'élément d'écartement (14, 14') sont soudées l'une à l'autre bout à bout.

8. Cadre auxiliaire selon les revendications 5 et 6, **caractérisé en ce que** deux extrémités de boucle (14.4, 14.5) de l'élément d'écartement (14, 14') sont soudées à distance l'une de l'autre et par assemblage à recouvrement avec la partie en forme de barrette (14.3).

9. Cadre auxiliaire selon la revendication 8,
**caractérisé en ce que** les assemblages soudés sont réalisés, au niveau des deux extrémités de boucle (14.4, 14.5), comme des cordons de soudure (14.6) obtenus par soudure d'angle.

10. Cadre auxiliaire selon l'une quelconque des revendications 1 à 5, **caractérisé en ce que** l'élément d'écartement (14") est réalisé de façon monobloc comme une pièce métallique coulée ou forgée.

11. Cadre auxiliaire selon l'une quelconque des revendications 1 à 10, **caractérisé en ce que** l'élément d'écartement (14, 14', 14") présente au moins deux parties en forme de manchon (14.1) servant au passage au moins de deux vis prévues pour la fixation à la carrosserie.

12. Cadre auxiliaire selon l'une quelconque des revendications 1 à 11, **caractérisé en ce que** l'élément d'écartement (14, 14', 14") présente au moins deux parties en forme de manchon (14.2) servant au logement au moins de deux vis de l'assemblage à vis du pont transversal (20).

13. Cadre auxiliaire selon la revendication 11 ou 12, **caractérisé en ce que** l'élément d'écartement (14, 14', 14") est configuré en forme d'étoile.

14. Cadre auxiliaire selon l'une quelconque des revendications 1 à 13, **caractérisé en ce que** la partie en forme de manchon (14.2) présente, pour le logement d'une vis de l'assemblage à vis du pont transversal (20), une surface de section de logement qui est plus petite que la surface de section de logement de la partie en forme de manchon (14.1) de l'élément d'écartement (14, 14', 14"), laquelle partie en forme de manchon sert au passage d'une vis prévue pour la fixation à la carrosserie.

15. Cadre auxiliaire selon l'une quelconque des revendications 1 à 14, **caractérisé en ce qu'**un épaulement (2.11, 2.21) servant au logement de l'élément d'écartement est formé dans le premier élément en forme de coque (2.1) et/ou dans le deuxième élément en forme de coque (2.2).
